# EUROPEAN PATENT APPLICATION

(11) **EP 4 317 759 A1**
(43) Date of publication of application: **07.02.2024**
(21) Application number: 23183745.1
(22) Date of filing: 05.07.2023
(51) Int. Cl.: F16L 59/02, F16L 59/22

(54) **PRE-PACKED BENDED INSULATION MATERIAL**

(30) Priority: 03.08.2022 NL 2032671
(71) Applicant: R. Van Den Hanenberg B.V., 5145 PC Waalwijk (NL)
(72) Inventor: HEYMANS, Antonius Gerardus Johannes Henricus, 5145 PC Waalwijk (NL); DE WIT, Lambertus Irian Petrus Maria, 5145 PC Waalwijk (NL)
(74) Representative: Patent Business B.V.

(57) **Abstract**

The present invention is in the field of engineering elements and units, in particular thermal insulation in general, such as for pipes, joints, fittings for pipes, and means for thermal insulation, more in particular to a package 10 comprising insulation material to be applied on a 3-dimensional structure, a method for applying thermal heat insulation, and an insulated 3D-structure.

## Description

### FIELD OF THE INVENTION

The present invention is in the field of engineering elements and units, in particular thermal insulation in general, such as for pipes, joints, fittings for pipes, and means for thermal insulation, more in particular to a package comprising insulation material to be applied on a 3-dimensional structure, a method for applying thermal heat insulation, and an insulated 3D-structure.

### BACKGROUND OF THE INVENTION

Insulation in air conditioning, cool installations, process installation, and heating installation has become more important over the years.

In this respect, thermal insulation relates to a reduction of heat transfer between objects in thermal contact or in range of radiation influence, such as tubing in a maintenance room. Thermal insulation can be achieved with suitable object shapes and materials. The heat transfer (flow) is considered as an inevitable consequence of contact between objects of differing temperature. In order to reduce heat flow, and thus maintaining an object substantially at a same temperature, a thermal insulation is provided. The thermal insulation has a reduced thermal conduction or likewise an insulating action. A thermal conductivity (k) is used to quantify insulating properties. Therein a low thermal conductivity value indicates a high insulating capability (R-value). Other important properties of insulating materials are product density (ρ) and specific heat capacity (c). It is noted that cooling requires much more energy than heating; so maintaining a low temperature is in view of energy consumption quite important.

Heating and cooling systems are sources of heat. They distribute heat through buildings, typically by means of pipe or ductwork. In order to reduce energy consumption insulating these pipes using pipe insulation in unoccupied rooms is required. It further prevents condensation occurring on cold and chilled pipework. Preventing the formation of condensation on pipework is important as moisture contributes to corrosion.

Likewise chemicals, water, air, electrical cables, can run through pipe work.

For (somewhat) complex piping insulation typically flexible elastomeric foams are used. These foams relate to flexible and closed-cell structures. Examples are rubber foams based on NBR or EPDM rubber. Flexible elastomeric foams exhibit such a high resistance to the passage of water vapor that they do not generally require additional water-vapor barriers. Such high vapor resistance, combined with the high surface emissivity of rubber, allows flexible elastomeric foams to prevent surface condensation formation with comparatively small thicknesses.

For heat insulation materials as foams, wool-like materials, either from natural or synthetic origin, and the like may be used. For parts of an installation, such as straight tubes and the like, standard parts may be used.

Complex structures, such as pipe-couplings, passages through walls and floors, bends, bifurcations, sensors, T-junctions, controllers, closures, vents, locking wheels, supports, suspensions, (butterfly)valves, flanges and branches, are especially difficult to insulate. For instance, for curved sections curved insulation needs to be applied. Such curved insulation may be made on the location where the insulation needs to be provided, or in another location. Especially the curved insulation material is rather voluminous and difficult to transport.

Incidentally reference can be made to DE 692 03 084 T2 A, DE 33 00 443 A1, and DE 28 02 470 A1. DE 692 03 084 T2 A recites a technique for insulating pipework elbows by a defined cut of cylindrical shells made of an insulating material. The choice of the number of sections allows optimum insulation to be obtained. The packaging of the cut elements in their position of before chopping allows economical and practical packaging. DE 33 00 443 A1recites an insulating system consisting of foam half-shells which have a solid outer sleeve. In the production of the half-shells, this outer sleeve (10), usually a cylindrical pipe section of metal or plastic, serves as a mould. The insulating system has a relatively high resistance to fire and damage. DE 28 02 470 A1 recites insulating pipe fittings and sections of elastic plastics comprising cutting strips of a flat web, their widths corresponding to the outer circumference of the intended article; continuously punching partial areas in predetermined spacings from the respective strips but so that no individual strip is severed into incoherent bits. The shapes of these punched-out areas is such that they will subsequently fit together to give an intended article. The so-treated strips are then shaped to tubular form and abutting faces welded or glued together. Any surplus parts are finally cut off. Used for mfr. of sections of pipe fittings e.g. T-pieces which fit into one another, for subsequent assembly by butt-welding or glueing. Component fit very accurately so that the resulting t-, L- or other fitting is reliably free from leakage points.

The present invention therefore relates to an improved method for insulating and products used therein, which overcomes one or more of the above disadvantages, without jeopardizing functionality and advantages.

### SUMMARY OF THE INVENTION

The present invention relates in a first aspect to a package 10 comprising at least four tubes 1 of a thermal heat insulation, wherein each tube individually comprises a plurality of separate corner segments 1a,b,c, each corner segment comprising with respect to a central axis thereof at least one cut under an oblique angle, the oblique angle being in a range of 8-50 degrees, in particular 10-45 degrees, more in particular 15-30 degrees, wherein the corner segments are rotated over the central axis thereof such that adjacent corner segments form a substantially straight tube 1, in particualr wherein each individual cut under an oblique angle does not intersect in the tube with another individual cut under an oblique angle, therewith providing a corner segment comprising two straight sides 3a,b with respect to the central axis, of which two straight sides 3b is relatively larger than straight side 3a. One may consider the tube 1 to be segmented, typically in equal parts, which tube is configured to insulate a bend or the like in a 3D-structure configured to provide fluid flow therethrough. The present package provides an easy way of transportation of the tubes for thermal insulation, in particular wherein a multifold of insulation material can be transported within a similar or equal volume of package. The present package is in particular suited for tubes with larger diameters. It further provides time savings, in particular when applying the thermal insulation. It is noted that often the thermal insulation is difficult to apply, e.g. of limited space available in direct vicinity of the 3-D-structure. The limited space does not provide much room for maneuvering or the like, nor for applying the corner segments. As such, the prepared segments make insulation quicker and easier. By carefully making the corner segments a perfect fit between adjacent segments is obtained.

In a second aspect the present invention relates to a method for applying a thermal heat insulation on a tube-bend of a 3-dimensional structure configured for flowing a fluid therethrough, comprising providing the package according the invention, applying two-four corner segments to the tube-bend with a bending corner of between 60-120 degrees for providing thermal insulation thereof.

In a third aspect the present invention relates to an insulated 3D-structure obtained by a method according to the invention.

Despite that many tasks in nowadays society may be highly automated or machine supported, insulation still largely relates to applying pieces of insulation material by hand. Such is especially the case for large ductworks, having external diameters ranging from 15 mm -2m (similar to DN15 to DN2000, such as DN20, DN50, DN80, DN100, DN200, DN250, etc.), typically being used for transport of fluids, like hot and cold water, and gases, like nitrogen and air. Modern ductwork may involve multitudes of 100-10.000 meters or more for a building or building complex. For understanding in a typical day 2000 m of ductwork may be isolated, whereas such an isolation may continue for months. The ductwork is typically formed from a metal, such as stainless steel, aluminum, or from plastics.

In an insulation step elements from insulation material are formed, typically by hand. The elements together are intended to form a closed structure around the pipe work, or part thereof. As such the elements need to fit perfectly with respect to one and another. It is noted that often, despite standardized measures of pipe work, most of the work is done on location, that is where the pipe work is present.

In a next step the one or more elements are applied on the 3-dimensional structure. The one or more elements may be fixed by applying an adhesive.

The present invention is in particular suited for heat insulation, that is preventing heat to escape from the ductwork.

Thereby the present invention provides a solution to one or more of the above mentioned problems and drawbacks, without jeopardizing beneficial effects. Advantages of the present description are detailed throughout the description.

### DETAILED DESCRIPTION OF THE INVENTION

The present invention relates in a first aspect to an improved package according to claim 1. The 3-dimensional structure typically relates to elements of ductwork and piping, such as pipe-couplings, passages through walls and floors, bends, bifurcations, sensors, T-junctions, controllers, closures, vents, locking wheels, supports, suspensions, (butterfly)valves, flanges and branches. The outward extending connecting section may also relate to a sensor, a controller, a closure, etc.; the term indicates such extensions in general.

In an exemplary embodiment of the present package a tube comprising a set of corner segments each individually is configured to provide thermal insulation to a tube-bend with a bending corner of between 60-120 degrees, in particular of 90 degrees.

The present package the insulation is configured for a tube-bend with a tube diameter of 50-500 mm, in particular from 100-300 mm. These tube diameters are considered to be relatively large, and more difficult to insulate. The present package, and prepared corner segments is especially suited for such larger diameters.

In an exemplary embodiment of the present package the at least four tubes (1) each individually comprise at least one tube end corner segment (1a) with respect to a central axis thereof at least one cut under a straight angle, the straight angle being in a range of 85-95 degrees, in particular 89-91 degrees, more in particular 89.9-90.1 degrees, in particualr two tube end corner segments (1a).

In an exemplary embodiment of the present package two-four corner segments together are configured to provide thermal insulation to a tube-bend with a bending corner of between 60-120 degrees, in particular three corner segments (1a,b,c) for a corner of 90 degrees.

In an exemplary embodiment of the present package the plurality of separate corner segments comprises 9-24 corner segments, in particular 12-15 corner segments.

In an exemplary embodiment of the present package the package is made of a material selected from cardboard, polymeric material, such as PP, PE, and PVC, and wood-like materials.

In an exemplary embodiment of the present package each individual corner segment may be cut-open, such that it is configured to be directly applied on a bend of the 3D-structure. Thereto also adhesive material, such as in the form a tape, may be provided, to firmly apply the corner segment.

In an exemplary embodiment of the present package also visual items may be provided, e.g. to provide direct recognition of corner segments that together form a pre-determined bend.

In an exemplary embodiment of the present package in the plurality of corner segments at least two adjacent corner segments are fixed to one and another, such as by adhesive tape

In an exemplary embodiment of the present method at a first location corner segments are provided, a plurality of corner segments are rotated with respect to one and another such that a tube structure is provided, and putting at least four tubes of said tube structure into a package, and at a second location applying the two-four corner segments to the tube-bend. Therewith at the first location relatively complex tasks can be performed, having enough space available for doing so. At the second location the more difficult tasks of cutting and applying are prevented as much as possible, in view of space, and only the preformed segments can be applied to the 3D-structure.

In an exemplary embodiment of the present method the three dimensional structure comprises at least two individual tube sections connected by a tube-bend.

In an exemplary embodiment of the present method the thermal heat insulation has a thickness of 0.5 cm-25 cm, in particular 1-10 cm, more in particular 2-7 cm.

In an exemplary embodiment of the present method the insulation material is a foam.

In an exemplary embodiment of the present method the insulation material is a dust and fiber free material.

In an exemplary embodiment of the present method the insulation material has a closed cell structure, preferably interconnected closed cells.

In an exemplary embodiment of the present method the three dimensional structure may comprise at least two individual tube sections and an outward extending connecting section. The present method is therewith versatile.

In an exemplary embodiment of the present method a mold may be used to form the corner segments.

The invention is further detailed by the accompanying example and figures, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE FIGURES

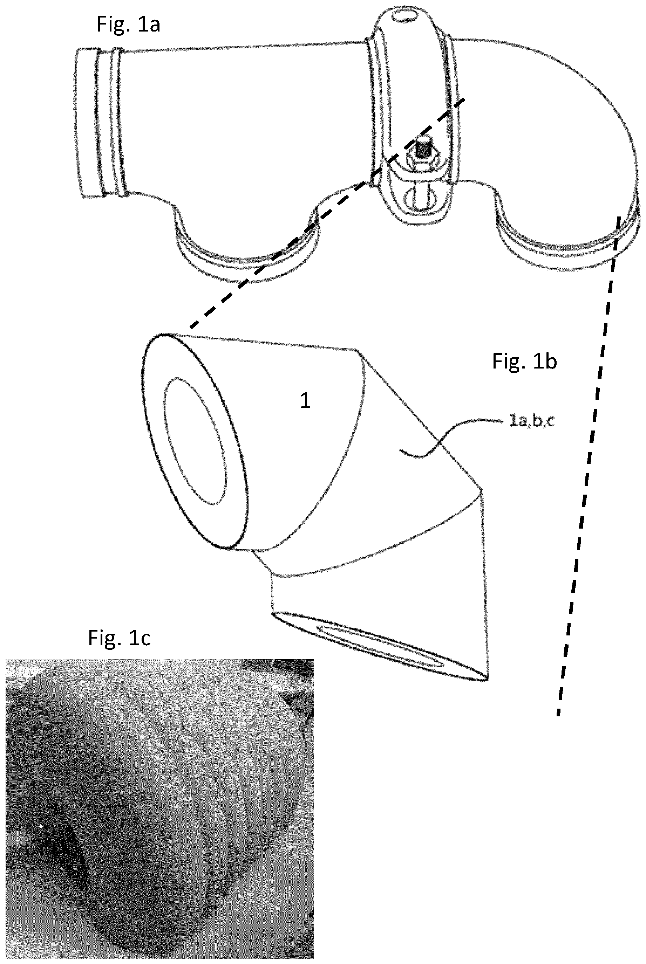

Figs. 1a-c, 2a-b and 3 show illustrations of the present invention.

### DETAILED DESCRIPTION OF THE FIGURES

Fig. 1a shows a to be insulated bend, at a right side thereof. Fig. 1b shows a tube (1) of a thermal heat insulation, wherein the tube comprises a plurality (three) of separate corner segments (1a,b,c), each corner segment comprising with respect to a central axis thereof at least one cut under an oblique angle, the oblique angle being 30 degrees. Fig. 1c shows prepared ready to install insulation tubes for a bend in a 3D-structure according to the prior art. Nine such tubes are shown, each with 10 cuts, and each forming a bend of 90 degrees. The machined bends (Rockwool MB960) look the same as the standard PIR bends. The bends from splines (SB960) are constructed from PS960 shells. See below for some examples (Size: 457x100). Packaging is dependent on dimensions and number of parts. They may be provided loose on a pallet, or as such in pallet boxes.

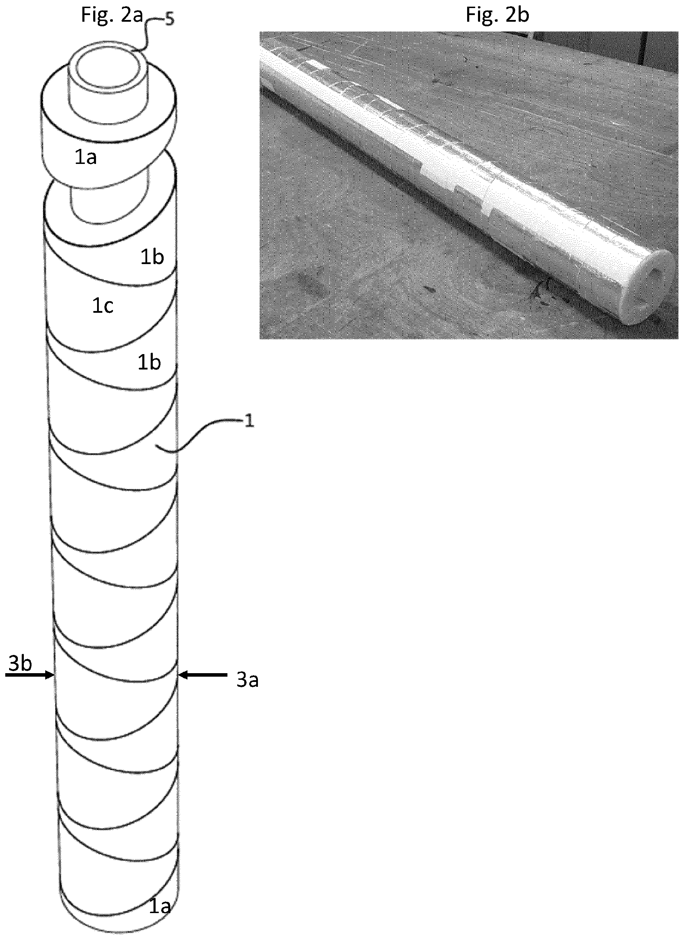

Fig. 2a shows a tube having 16 separate corner segments, which are rotated with respect to adjacent segments, such that a straight tube is formed, without any openings. Therein straight corner segments 1a are also shown. Typically each individual cut (represented by solid tilted lines) under an oblique angle does not intersect in the tube with another individual cut under an oblique angle, therewith providing a corner segment comprising two straight sides 3a,b with respect to the central axis, of which two straight sides 3b is relatively larger than straight side 3a. Fig. 2b shows an example thereof, having about 30 corner segments.

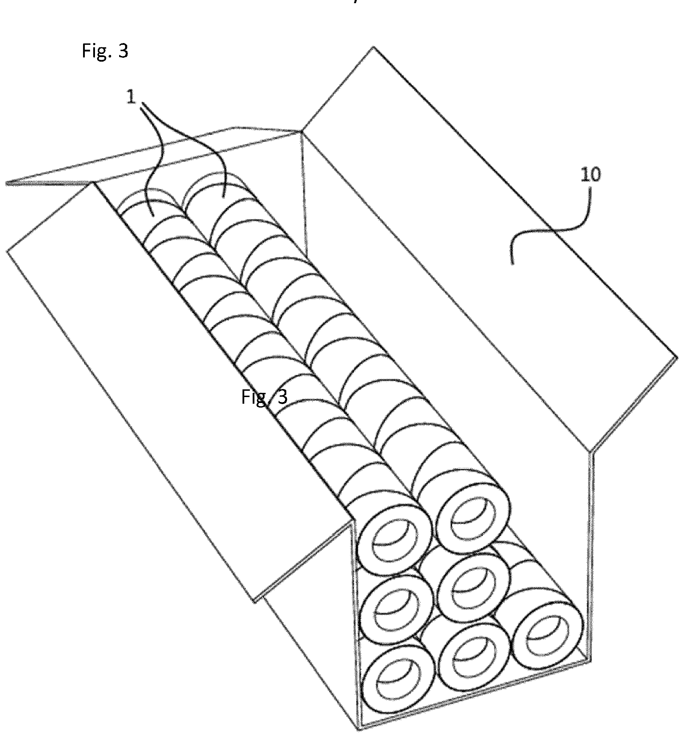

Fig. 3 shows a package having five tubes therein, wherein apparently a sixth tube may have already been removed from the package.

### Example

In an example Rockwool bends are used. Inventors first cut the segments to the desired angle and distance (example figs. 2a,b); then inventors place the segments on a pipe (of 76 mm diameter) for supporting the segments of 1 meter to get exactly the same meter again. Then inventors stick on both sides removable bars of masking tape so it remains constructively as a whole. One could also seal the whole construct. Inventors can now put the meter of segments back in the box (fig. 3). At work, one now just need to remove the tape (or the plastic) and one can put the segments right on the bends, which will then fit perfectly.

## Claims

1. A package (10) comprising thermal heat insulation, **characterized in that** it comprises
at least four tubes (1) of a thermal heat insulation, wherein each tube individually comprises a plurality of separate corner segments (1a,b,c), each corner segment comprising with respect to a central axis thereof at least one cut under an oblique angle, the oblique angle being in a range of 8-50 degrees, in particular 10-45 degrees, more in particular 15-30 degrees, wherein the corner segments are rotated over the central axis thereof such that adjacent corner segments form a substantially straight tube (1), wherein in the plurality of corner segments at least two adjacent corner segments are fixed to one and another,
wherein the insulation is configured for a tube-bend with a diameter of 50-500 mm, in particular from 100-300 mm.

2. The package according to claim 1, wherein a tube comprising a set of corner segments each individually is configured to provide thermal insulation to a tube-bend with a bending corner of between 60-120 degrees, in particular of 90 degrees.

3. The package according to any of claims 1-2,. wherein the at least four tubes (1) each individually comprise at least one tube end corner segment (1a) with respect to a central axis thereof at least one cut under a straight angle, the straight angle being in a range of 85-95 degrees, in particular 89-91 degrees, more in particular 89.9-90.1 degrees, in particualr two tube end corner segments (1a).

4. The package according to any of claims 1-3, wherein two-four corner segments together are configured to provide thermal insulation to a tube-bend with a bending corner of between 60-120 degrees, in particular three corner segments (1a,b,c) for a corner of 90 degrees.

5. The package according to any of claims 1-4, wherein the plurality of separate corner segments comprises 9-24 corner segments, in particular 12-15 corner segments, and/or
wherein in the plurality of corner segments at least two adjacent corner segments are fixed to one and another by adhesive tape.

6. The package according to any of claims 1-5, wherein the package is made of a material selected from cardboard, polymeric material, such as PP, PE, and PVC, and wood-like materials.

7. A method for applying a thermal heat insulation on a tube-bend of a 3-dimensional structure configured for flowing a fluid therethrough, **characterized in that** the method comprises
providing the package according to any of claims 1-6,
applying two-four corner segments to the tube-bend with a bending corner of between 60-120 degrees for providing thermal insulation thereof,
wherein at a first location corner segments are provided, a plurality of corner segments are rotated with respect to one and another such that a tube structure is provided, and
putting at least four tubes of said tube structure into a package,
or providing said package, and
at a second location applying the two-four corner segments to the tube-bend.

8. The method according to any of claim 7, wherein the three dimensional structure comprises at least two individual tube sections connected by a tube-bend.

9. The method according to any of claims 7-8,
wherein the thermal heat insulation has a thickness of 0.5 cm-25 cm, in particular 1-10 cm, more in particular 2-7 cm.

10. The method according to any of claims 7-9,
wherein the insulation material is a foam, and/or
wherein the insulation material is a dust and fiber free material, and/or
wherein the insulation material has a closed cell structure, preferably interconnected closed cells.
